**Europäisches Patentamt**

(19) **European Patent Office**

**Office européen des brevets**

(11) Publication number : **0 356 127 B1**

## EUROPEAN PATENT SPECIFICATION

(45) Date of publication of patent specification :
01.03.95 Bulletin 95/09

(51) Int. Cl.⁶ : **H04L 9/30**

(21) Application number : **89308309.7**

(22) Date of filing : **16.08.89**

(54) **A RSA computation method for efficient batch processing.**

(30) Priority : **24.08.88 IL 87549**

(43) Date of publication of application :
**28.02.90 Bulletin 90/09**

(45) Publication of the grant of the patent :
**01.03.95 Bulletin 95/09**

(84) Designated Contracting States :
**BE CH DE FR GB IT LI SE**

(56) References cited :
**US-A- 4 405 829**

(73) Proprietor : **ALGORITHMIC RESEARCH LTD.**
**5 Tfuzot-Israel Street**
**Givataim 53 583 (IL)**

(72) Inventor : **Fiat, Amos**
**13 Hasavorim Street**
**Tel Aviv (IL)**

(74) Representative : **Wombwell, Francis et al**
**Potts, Kerr & Co.**
**15, Hamilton Square**
**Birkenhead Merseyside L41 6BR (GB)**

## Description

## BACKGROUND OF THE INVENTION

This invention relates to public key encryption techniques, and more particularly to a method for efficient batch processing RSA digital signatures and secret key computations.

## RELATED PATENTS

This invention employs public-key-encryption concepts as disclosed in U.S. Patent No. 4,200,770 entitled "Cryptographic Apparatus and Method", to W. Diffie and M. E. Hellman, Apr. 29, 1980; U.S. Patent No. 4,405, 829 entitled "Cryptographic Communications System and Method", to R. Rivest, A. Shamir and L. Adleman, Sep. 20, 1983; and, U.S. Patent No. 4,424,414, entitled "Exponentiation Cryptographic Apparatus and Method", to S. C. Pohlig and M. E. Hellman, which are all expressly incorporated herein by reference.

## DESCRIPTION OF THE PRIOR ART

Public key encryption is a concept which emerged in the 1970s. It centers on the idea of using different keys for encryption and decryption. The crucial point is that the decryption key cannot be deduced analytically from the encryptior key. Each correspondent in the public key system has a unique pair of keys: an encryption key and a matching decryption key. Data encrypted with one particular person's encryption key can only be decrypted using the same person's decryption key.

Each person can therefore make his encryption key known freely to anyone. This is analogous to publishing one's telephone number in the telephone directory. If A wishes to set an encrypted message-data signal to B, he looks up B's published encryption key and encrypts his message-data signal using that key. Now the only person who can decrypt the enciphered message-data signal is B, using his secret decryption key. Not even A can decrypt the enciphered message-data signal, despite the fact that A encrypted it.

Public key encryption overcomes the communications problems of symmetric encryption algorithms for one main reason: while there is secret key information (each person's decryption key is secret), none of it need ever change hands. The only information which does need to be exchanged can be exchanged without any secrecy at all.

Various different algorithms for public key encryption have been proposed, most of which have been found to be flawed mathematically in some way. The single one to emerge which is generally acceptable is the RSA algorithm invented by Rivest, Shamir and Adleman, supra, and published in 1978.

RSA uses unique "keypairs" (pairs of numbers) for encryption and decryption. Each user of an RSA based system has his own pair, consisting of a freely publicized encryption key known as e, and a strictly private decryption key referred to as d. The algorithm also uses a modulus n.

Encryption and decryption comprise an exponentiation operation. If the plaintext is represented as a message-data signal, x, then RSA encryption is the operation $y = x^e$ modulo n which produces a ciphertext represented as an enciphered-message-data signal, y.

Decryption is the operation

$$x = y^d \text{ modulo } n$$

which restores x from y. The encryption process can be viewed as transforming the message-data signal to the enciphered-message-data signal by raising the message-data signal, x, to the eth power modulo n. The decryption process can be viewed as transforming the enciphered-message-data signal to the message-data signal by taking the eth root of the enciphered-message-data signal, y, modulo n. The security of this encryption relies upon the difficulty of calculating d from e and n. The correct choice of e, d and n is essential to the RSA algorithm. The modulus n is a product of two primes, p and q See Rivest, Shamir and Adelman, supra.

The RSA algorithm can be used with numbers of any size, provided that they are chosen correctly. The larger n is, the harder the encryption is to crack. A commonly accepted standard is to use 512-bit numbers, which are equivalent to decimal numbers with approximately 150 digits. Cracking a 512-bit RSA would typically take tens of thousands of years on the most powerful computers currently available.

While encrypting a message-data signal with RSA guarantees that only the recipient will be able to decrypt it, it does not tell the recipient anything about the identity of the sender; anyone who knows the published encryption key could have encrypted the message-data signal. There is often a need to guarantee both the identity of the sender of a message-data signal and the contents of the message-data signal. A typical example might be instructions given to a bank to transfer money from one account to another: the bank needs to know for certain that the instructions have come from an authorized person and that the details of the payment have not been tampered.

The RSA algorithm provides an elegant means for fulfilling these requirements, by using the RSA algorithm as digital signature exponents. The sender of a signature represented as a signed-message-data signal can sign his signature using his own secret key, which is normally the decryption key. The signing of a signature using one's own secret key can be viewed as taking the eth root of a signature, modulo n. Anyone can verify the signed-message-data signal using the sender's published key, e.

The verification of the signature represented as a verified-message-data signal can be viewed as raising the signed-message-data signal to the eth power, modulo n. If this verification produces the correct verified-message-data signal, then the signed-message-data signal can only have come from the appropriate sender, and thus both its contents and origin have been authenticated. Note, however, that the verification no longer offers protection against disclosure of contents, as anyone can verify the signed-message-data signal using the published key exponant.

## OBJECTS AND SUMMARY OF THE INVENTION

An object of the present invention is to provide a method for efficiently computing digital signatures in a batch mode.

Another object of the present invention is to provide a method for efficiently transforming enciphered-message-data signals and generating signed-message-data signals in a batch mode.

According to the present invention, as embodied and broadly described herein, a cryptographic method for concurrently performing the RSA public key encryption scheme utilizing a processor on a first message-data signal M1 and a second message-data signal M2, whereby a first message-data-signal root $M1^{1/e1}$, being an $e1^{th}$ root of M1 and a second message-data-signal root $M2^{1/e2}$, being an $e2^{th}$ root of M2 are produced, where e1 and e2 are relatively prime, is provided, comprising the steps of:

computing an exponent product, e, by multiplying e1 times e2;

computing a message product, M, wherein:
$$M = M1^{(e/e1)}M2^{(e/e2)},$$

computing a batch root, R, wherein
$$R = M^{1/e},$$

computing an euclidean inverse, t, of e2 modulo e1, and

computing $R^{e2*t}/(M1^{((e2*t-1)/e1)}M2^{t})$,

thereby generating the first message-data-signal root $M1^{1/e1}$. The present invention can be extended for concurrently performing the RSA scheme on a plurality of message-data signals M1, M2, ....Mk, whereby a plurality of message-data signal roots that are the $e1^{th}$, $e2^{th}$,....., $ek^{th}$ roots of M1, M2 ....Mk, respectively, are produced, where the ei and ej are pairwise relatively prime for $i \neq j$.

## DETAILED DESCRIPTION OF THE PREFERRED EMBODIMENTS

Reference will now be made to the present preferred embodiments of the invention.

The Rivest-Shamir-Adleman (RSA) scheme, supra, when viewed as a digital signature scheme is expensive to use on a large central computer. A full exponentiation is required for generating every digital signature.

The present invention provides a modification to the RSA method that allows far more efficient processing when the digital signatures are to be generated in a batch mode. That is, when several digital signatures are to be generated at once.

The RSA method normally is used with one signature-verification exponent or public-encryption exponent, e and one matching and secret-signature exponent or decryption exponent, d, respectively. All arithmetic is performed modulo as publicly known composite number n whose prime factors, p and q, are kept secret.

To sign a message-data signal M, one extracts the e'th root of M by raising M to the d'th power. When using the RSA scheme for several documents needing the identical signature, one must activate the scheme for each and every signature, so that a person wishing to use the scheme for several documents, or a central computer having to analyze many signatures, will have to use up long and expensive computer time. The present invention provides a method for using the RSA scheme for simultaneously signing in parallel, or analyzing in parallel the same signature, by using the exponential formula one time.

Using the RSA scheme, the method of decrypting a enciphered message-data signal which represents a message, and the method of signing a message-data signal which represents a signature, are the same : taking the eth root of the enciphered-message-data signal and the message data signal, respectively.

The method of encrypting a message-data signal which represents a message, and the method of verifying a signed-message-data signal which represents a signature are the same : raising the message-data signal and the signed-message-data signal to the eth power, respectively.

The method of the present invention is described and claimed herein with reference to a message-data signal and enciphered-message-data signal. These terms also are meant to include a signed-message-data signal and a verified-message-data signal, respectively.

Usually, the exponent, e, is chosen to be a small prime, say 3 or 5.

It is suggested to have a variant where the digital signature is considered valid when the encryption exponents is either 3 or 5 or 7 or 11 or any other small prime.

Consider the case of two message-data signals, M1 and M2. In the RSA scheme one would have to compute a first message-data-signal root $M1^{(1/3)}$ modulo n and a second message-data-signal root $M2^{(1/3)}$ modulo n as two independent operations.

If one allows the roots to be either the 3rd root or the 5th root, then, according to the present invention, one could compute the first message-data-signal root as the 3rd root of M1 and the second message-data-signal roog as the 5th root of M2 by performing only one full scale exponentiation:

Generate a message product $M = M1^5 * M2^3$ and compute a batch root, $R = M^{(1/15)}$, which is one full scale exponentiation.

Note that 5 and 3 are relatively prime, let $t = 5^{-1} \pmod 3$. I.e., $t = 2$ as $5*2 \bmod 3 = 10 \bmod 3 = 1$.

To extract a first message-data-signal root $M1^{(1/3)} \bmod n$, we use the following algorithm:

Generate an exponent product, e:

$$e = e1 * e2 = 3 * 5 = 15.$$

Generate the message product, M:

$$M = M1^{(e/e1)} * M2^{(e/e2)} \pmod n = M1^{(15/3)} * M2^{(15/5)} \pmod n = M1^5 * M2^3 \pmod n.$$

Generate the batch root, R:

$$R = M^{(1/e)} \pmod n = M^{(1/15)} \pmod n = (M1^5 * M2^3)^{(1/15)} \pmod n = M1^{(1/3)} * M2^{(1/5)} \pmod n.$$

Now, our goal is to extract the first message-data-signal root $M1^{(1/3)}$ modulo n from the batch root, R:

Let $t = 5^{(-1)} \pmod 3 = 2$.

Generate $R^{(e2*t)}/(M1^{((e2*t-1)/e1)}*M2^t) \pmod n$.

Note that $R^{(5*2)}/(M1^{((5*2-1)/3)}*M2^2) \pmod n =$

$R^{10}/(M1^3*M2^2) \pmod n =$

$(M1^{(1/3)}*M2^{(1/5)})^{10}/(M1^3*M2^2) \pmod n =$

$M1^{(3+1/3)}*M2^2/(M1^3*M2^2) \pmod n =$

$M1^{(1/3)} \pmod n.$

Note that $R/(M1^{(1/3)}) \pmod n = M2^{(1/5)} \pmod n$ so we have extracted both the first message-data-signal root $M1^{(1/3)} \pmod n$ and the second message-data-signal root $M2^{(1/5)} \pmod n$.

In general, the method uses a processor for batch processing the first message-data-signal root as an $e1^{th}$ root of a first message-data-signal, M1, as $M1^{1/e1}$, and the second message-data-signal root as an $e2^{th}$ root of a second message-data signal, M2, as $M2^{1/e2}$. The numbers e1 and e2 are relatively prime. Using the processor, the method performs the steps of computing an exponent product, e, by multiplying e1 times e2, and computing a message product, M, wherein $M = M1^{(e/e1)}M2^{(e/e2)}$. From M, the method computes a batch root, R, wherein $R = M^{1/e}$. An euclidean inverse, t, of e2 modulo e1 is then computed. The first message-data-signal-root $M1^{(1/e1)}$ is computed from $R^{e2*t}/(M1^{((e2*t-1)/e1)}M2^t)$. The second message-data-signal root $M2^{(1/e2)}$ is computed from $R/(M1^{1/e1})$.

Given M1, M2, . . ., Mk, with respective encryption exponents e1, e2, . . ., ek, pairwise relatively prime, let the exponent product $e = e1*e2* \ldots *ek$. Our goal is to extract the message-data-signal roots $M1^{(1/e1)}$, $M2^{(1/e2)}$, ..., $Mk^{(1/ek)}$ modulo the composite n. For simplicity we will assume that k is a power of two, it is a very trivial modification to generalize the algorithm for arbitrary k.

This compares very favorably with the prior art which would require $O(k*\log(n))$ multiplications. An optimal batch size of $k = \log(N)/\log\log(n)$ messages, using the first k primes as exponents e1, ..., ek gives us $O((\log\log(n))^2)$ multiplications per root.

Method overview:

Step 1:

Compute a message product, M, wherein $M = M1^{(e/e1)}*M2^{(e/e2)}*...*Mk^{(e/ek)}$. We do this in $O(\log(e)*\log(k))$ multiplications, much faster than the prior art which requires $O(\log(e)*k)$ multiplications.

To do this we run through the following algorithm:

The first phase:

Compute $M1^{e2}, M2^{e1}, M3^{e4}, M4^{e3}, M5^{e6}, M6^{e5}, ...M(k-1)^{ek}, Mk^{e(k-1)}$. Generally, M(2i-1) is raised to the power e(2i) whereas M(2i) is raised to the power of e(2i-1).

4

Let M(1..2) equal $M1^{e2} * M2^{e1}$, M(3..4) equal $M3^{e4} * M4^{e3}$, etc. Generally, $M((2i-1)..2i) = M(2i-1)^{e(2i)} * M(2i)^{e(2i-1)}$. The second phase:

Now we compute $M(1..2)^{(e3*e4)}$, $M(3..4)^{(e1*e2)}$, $M(5..6)^{(e7*e8)}$, $M(7..8)^{(e5*e6)}$, ..., and compute M(1..4) as $M(1..2)^{(e3*e4)} * M(3..4)^{(e1*e2)}$, M(5..8) as $M(5..6)^{(e7*e8)} * M(7..8)^{(e5*e6)}$, etc.

Generally M((4i-3)..4i) is equal to $M(4i-3..4i-2)^{(e(4i-1)*e(4i))} * M(4i-1..4i)^{(e(4i-e)*e(4i-2))}$.

We continue this process of generating larger and larger products M(8i-7..8i) from the previous products M(8i-7..8i-4) and M(8i-3..8i). The jth phase would generate products $M((2^j)*(i-1)+1..(2^j)*1)$.

At each phase we get products that are twice as long, thus we have log(k) phrases. The number of multiplications required in each phase is proportional to the overall length of the exponents in each phase, which is equal to log(e1*e2 ... *ek) - log(e).

Step 2:

Extracting the e'th root of the product computed in step 1 generates a batch root, R, wherein R = $M1^{(1/e1)} * M2^{(1/e2)} * ... * Mk^{(1/ek)}$

This requires some constant time log(n) multiplications.

Step 3:

We now split the batch root R into its components. This also requires some constant times log(k)*log(e) multiplications.

To describe this process we give a recursive algorithm. We show how to take the batch root R and generate a first and second subproduct, R1 and R2, respectively.

$$R1 = M1^{(1/e1)} * M2^{(1/e2)} * ... * M(k/2)^{e(k/2)}$$

and

$R2 = M(k/2+1)^{e(k/2+1)} * M(k/2+2) * ... * M(k)^{e(k)}$, using only some constant times log(e) multiplications. This gives us a general solution as we can apply the algorithm recursively on the subroots. The depth of the recursion is log(k) since once we get to roots of length one we are done. Overall this gives log(e)*log(k) multiplications.

Consider the exponent X defined by means of the Chinese remainder theorem:

X = 0 mod e1
X = 0 mod e2
...
X = 0 mod e(k/2)
X = 1 mod e(k/2+1)
X = 1 mod e(k/2+2)
...
X = 1 mod e(k)

X is well defined modulo e as the e(i) are pairwise relatively prime.

Let E1 denote the product of the first k/2 encryption exponents e1, e2, ..., e(k/2). Let E2 denote e/E1.

Note that E1 divides X, X = F1*E1, for some integer F1. Similarly, E2 divides X-1, X-1 = F2*E2, for some integer F2.

Now,

$$R^X = (R1 * R2)^X = R1^X * R2^X.$$
$$R1^X = R1^{(F1 * E1)} = (R1^{E1})^{F1},$$
$$R2^X = R2^{(X-1)} * R2 = (R2^{E2})^{F2} * R2.$$

However we have already computed $(R1^{E1})$ and $(R2^{E2})$, during the computation of message product M.

$$R1^{E1} = M1^{(E1/e1)} * M2^{(E1/e2)} * ... * M(k/2)^{(E1/e(k/2))}$$

which is computed as an intermediate result when computing M.

Similarly,

$$R2^{E2} = M(k/2 + 1)^{(E2/e(k/2 + 1))} * M(k/2 + 2)^{(E2/e(k/2 + 2))} * ... * Mk^{(E2/ek)}$$

was already computed as an intermediate result when computing M.

Thus, to extract R1 and R2 we compute $R^X/((R1^{E1})^{F1}*(R2^{E2})^{F2}) = R2$, R/R2 = R1. The number of multiplications is proportional to log(X) + log(F1) + log(F2).

The foregoing algorithm can be used as a fast method for extracting multiple roots of multiple message-data signals, or multiple roots of the same message-data signal. Consider the following example:

Using the RSA algorithm, Let p = 53 and q = 61, where n = 53 * 61 = 3233. Letting d = 791, we get e = 71. To encipher the message-data signal M = RENAISSANCE, we break it into blocks of 4 digits each, where A = 00, B = 01,...,Z = 25, and blank = 26. The plaintext message is

$$M = R\ E\quad N\ A\quad I\ S\quad S\ A\quad N\ C\quad E$$
$$= 1704\quad 1300\quad 0818\quad 1800\quad 1302\quad 0426.$$

The first block of the plaintext message is enciphered as $1704^{71} = 3106$ (mod 3233). The entire plaintext message is enciphered as

C = 3106 0100 0931 2691 1984 2927.

The method of the present invention can be used to decipher the entire enciphered message-data signal, C, in one batch root. This batch product root has the advantage of a faster speed when compared with taking multiple roots, which in the example, would be six roots.

The present invention is claimed using the term message-data signal. By this term is meant, in the broadest sense, any type of signal to which the present invention can be applied. The present invention encompasses, but is not limited to, using a variable encryption/signature verification exponent in an RSA-like scheme; batch signature/encryption processing for an RSA-like scheme; any signature scheme or public key encryption scheme requiring only polylog (n) multiplications where n is a parameter.

It will be appreciated by persons skilled in the art that the present invention is not limited by what has been particularly shown and described herein. Rather, the scope of the present invention is defined only by the claims which follow.

## Claims

1.  A cryptographic method, utilizing a processor, for concurrently performing an RSA-like public key encryption scheme on a first message-data signal M1 and a second message-data signal M2, whereby a first message-data-signal root $M1^{1/e1}$, being an $e1^{th}$ root of M1 and a second message-data-signal root $M2^{1/e2}$, being an $e2^{th}$ root of M2, are produced, where e1 and e2 are relatively prime, comprising the steps of:
    computing an exponent product, e, by multiplying e1 times e2;
    computing a message product, M, wherein:
    $$M = M1^{(e/e1)}M2^{(e/e2)};$$
    computing a batch root, R, wherein
    $$R = M^{1/e};$$
    computing an euclidean inverse, t, of e2 modulo e1; and
    computing $Re^{2*t}/(M1^{((e2*t-\ 1)/e1)}M2^{t})$,
    thereby generating the first message-data-signal root $M1^{1/e1}$.

2.  The method as set forth in claim 1, wherein the step of computing the message product, M, includes the step of computing:
    $$M = M^{(e/e1\ +\ e/e2)},$$
    when the first message-data signal is identical to the second message-data signal, M1=M2.

3.  A cryptographic method, utilizing a processor, for concurrently performing an RSA-like public key encryption scheme on a plurality of message-data signals M1, M2,......Mk, whereby a plurality of message-data-signal roots that are the $e1^{th}$, $e2^{th}$..., $ek^{th}$ roots of M1, M2.... Mk, respectively, are produced, where the ei and ej are pairwise relatively prime for $i{\neq}j$, comprising the steps of:
    computing an exponent product, e, by multiplying $e1* e2*....*ek$;
    computing a message product, M, wherein
    $$M = M1^{(e/e1)}M2^{(e/e2)}....* Mk^{(e/ek)};$$
    computing a batch root, R, wherein
    $$R = M^{1/e};$$
    splitting the batch root, R, into subproducts; and
    extracting the message-data-signal roots as the e1, e2,....., ek roots of the message-data signals, M1, M2, .....,Mk, from said subproducts.

4.  A cryptographic method, utilizing a processor, for concurrently determining a plurality of roots e1, e2,....., en, for a single message-data signal, M1, in accordance with an RSA-like public key encryption scheme, where the roots ei and ej are pairwise relatively prime for $i{\neq}j$, comprising the steps of:
    computing an exponent product, e, by multiplying $e1* e2* ...*ek$;

computing a message product, M, wherein

$$M = M1^{(e/e1 + e/e2 + .... + e/ek)};$$

computing a batch root, R, wherein $R=M^{1/e}$;

splitting the batch product root, R, into subproducts; and

extracting the roots of the message-data signal, M1, from said subproducts.

5. An apparatus for concurrently performing an RSA-like public key encryption scheme on a plurality of message-data-signal roots as the e1, e2,....ek, roots for a plurality of message-data signals, M1, M2,....Mk, respectively, where the ei and ej are pairwise relatively prime for i≠j, comprising:

a processor for performing computations;

exponent means responsive to the e1, e2, ...., ek, roots for computing an exponent product, e, by multiplying $e1* e2* ....*ek$;

message means responsive to the message-data signals, M1, M2, .... Mk, for computing a message product, M, wherein

$$M = M1^{(e/e1)}M2^{(e/e2)} * ;...., * Mk^{(e/ek)};$$

means coupled to said exponent means and said message means for extracting a batch root, R, wherein

$$R = M^{1/e}; \text{ and}$$

means coupled to said extracting means for splitting the batch root, R, into subproducts and extracting the message-data-signal roots as the e1, e2, ...., ek roots of the message-data signals, M1, M2, ...., Mk, from said subproducts.

6. An apparatus for concurrently performing an RSA-like public key encryption scheme on a plurality of roots, e1, e2, ...., ek, for a single message-data signal, M1, where the roots ei and ej are pairwise relatively prime for i≠j, comprising:

a processor for performing computations;

exponent means responsive to the e1, e2, ....ek, roots for computing an exponent product, e, by multiplying $e1* e2* .... *ek$;

message means responsive to the message-data signal, M1, for computing a message product, M, wherein

$$M = M1^{(e/e1 + e/e2) + .... + e/ek)};$$

means coupled to said exponent means and said message means for extracting a batch root, R, wherein

$$R = M^{1/e};$$

and

means coupled to said extracting means for splitting the batch root, R, into subproducts and extracting the message-data-signal roots as the e1, e2, .... ek roots of the message-data signal M1 from said subproducts.

**Patentansprüche**

1. Kryptographisches Verfahren unter Verwendung eines Prozessors zur gleichzeitigen Ausführung eines RSA-ähnlichen Verschlüsselungsschemas mit öffentlichem Schlüssel an einem ersten Nachrichten-Datensignal M1 und einem zweiten Nachrichten-Datensignal M2, worin eine Wurzel des ersten Nachrichten-Datensignals $M1^{1/e1}$, welche die e1te Wurzel aus M1 ist, und eine Wurzel des zweiten Nachrichten-Datensignals $M2^{1/e2}$, welche die e2te Wurzel aus M2 ist, erzeugt werden, worin e1 und e2 jeweils Primzahlen sind, und wobei das Verfahren die folgenden Schritte umfasst:

Berechnung eines Exponentenprodukts e durch Multiplizieren von e1 mit e2;

Berechnung eines Nachrichtenproduktes M, worin

$$M = M1^{(e/e1)}M2^{(e/e2)}$$

ist;

Berechnung einer Stapelwurzel R, worin

$$R = M^{1/e}$$

ist;

Berechnung einer Euklidinversion t von e2 Modulo e1; und

Berechnung von $R^{e2*t}/(M1^{((e2*t- 1)/e1)}M2^t)$,

wodurch die erste Nachrichten-Datensignalwurzel $M1^{1/e1}$ erhalten wird.

7

**2.** Verfahren nach Anspruch 1, worin bei der Ausführung des Schrittes zur Berechnung des Nachrichtenproduktes M die Berechnung

$$M = M^{(e/e1 + e/e2)}$$

ausgeführt wird, wenn das erste Nachrichten-Datensignal mit dem zweiten Nachrichten-Datensignal identisch ist, also M1 = M2.

**3.** Kryptographisches Verfahren unter Verwendung eines Prozessors zur gleichzeitigen Ausführung eines RSA-ähnlichen Verschlüsselungsschemas mit öffentlichem Schlüssel an mehreren Nachrichten-Datensignalen M1, M2, ... Mk, wobei zugehörige Nachrichten-Datensignal-Wurzeln erzeugt werden, welche jeweils die e1$^{te}$, e2$^{te}$, ..., ek$^{te}$ Wurzel von M1, M2,... Mk sind, worin die ei und die ej für i≠j paarweise zueinander prim sind, wobei das Verfahren folgende Schritte umfasst:

Berechnung eines Exponentenproduktes e durch Multiplizieren von e1∗e2∗...∗ek,
Berechnung eines Nachrichtenproduktes M, worin

$$M = M1^{(e/e1)}M2^{(e/e2)} ∗ ... ∗ Mk^{(e/ek)}$$

ist;
Berechnung einer Stapelwurzel R, worin

$$R = M^{1/e}$$

ist;
Aufspaltung der Stapelwurzel R in Subprodukte; und
Ausziehen der Nachrichten-Datensignalwurzeln als die e1$^{te}$, e2$^{te}$, ..., ek$^{te}$ Wurzeln der Nachrichten-Daten-Signale M1, M2, ..., Mk aus diesen Subprodukten.

**4.** Kryptographisches Verfahren unter Verwendung eines Prozessors zur gleichzeitigen Bestimmung einer Mehrzahl von Wurzeln e1, e2, ..., en eines einzelnen Nachrichten-Datensignals M1 in Übereinstimmung mit einem RSA-ähnlichen Verschlüsselungsschema mit öffentlichem Schlüssel, worin die Wurzeln ei und ej für i≠j paarweise relativ prim sind, umfassend die folgenden Schritte:

Berechnung eines Exponentenprodukts e durch Multiplizieren von e1∗e2∗...∗ek;
Berechnung eines Nachrichtenproduktes M, worin

$$M = M1^{(e/e1 + e/e2 + ... + e/ek)};$$

Berechnung einer Stapelwurzel R, worin $R = M^{1/e}$;
Aufspaltung der Stapelproduktwurzel R in Subprodukte; und
Ausziehen der Wurzeln aus dem Nachrichten-Datensignal M1 dieser Subprodukte.

**5.** Vorrichtung zur gleichzeitigen Ausführung eines RSA-ähnlichen Verschlüsselungsschemas mit öffentlichem Schlüssel an einer Mehrzahl von Nachrichten-Datensignal-Wurzeln als e1$^{te}$, e2$^{te}$, ... ek$^{te}$ Wurzeln für eine Mehrzahl von zugehörigen Nachrichten-Datensignalen M1, M2, ...Mk, wobei die ei und ej für i≠j paarweise relativ prim sind, enthaltend:

einen Prozessor zur Ausführung der Berechnungen;
Exponentenmittel, die auf die Wurzeln e1, e2, ...ek ansprechen, zur Berechnung eines Exponentenproduktes e durch Multiplizieren von e1∗e2∗...∗ek;
Nachrichtenmittel, die auf die Nachrichten-Datensignale M1, M2, ...Mk ansprechen, zur Berechnung eines Nachrichtenproduktes M, worin

$$M = M1^{(e/e1)}M2^{(e/e2)} ∗ ... ∗ Mk^{(e/ek)};$$

Mittel zum Ausziehen einer Stapelwurzel R, die mit den genannten Exponentenmitteln und Nachrichtenmitteln gekoppelt sind, wobei

$$R = M^{1/e};$$

und
mit den genannten Ausziehmitteln gekoppelte Mittel zur Aufspaltung der Stapelwurzel R in Subprodukte und Ausziehen der Wurzeln der Nachrichten-Datensignale als die e1$^{te}$, e2$^{te}$, ...ek$^{te}$ Wurzeln der Nachrichten-Datensignale M1, M2, ...Mk aus den genannten Subprodukten.

**6.** Vorrichtung zur gleichzeitigen Ausführung eines RSA-ähnlichen Verschlüsselungsschemas mit öffentlichem Schlüssel an einer Mehrzahl von Wurzeln e1, e2, ...ek für ein eizelnes Nachrichten-Datensignal M1, wobei die ei und ej für i≠j paarweise relativ prim sind, enthaltend

einen Prozessor zur Ausführung von Berechnungen,
Exponentenmittel, die auf die Wurzeln e1, e2, ...ek ansprechen, zur Berechnung eines Exponentenproduktes e durch Multiplizieren von e1∗e2∗...∗ek;
Nachrichtenmittel, die auf das Nachrichten-Datensignal M1 ansprechen, zur Berechnung eines

Nachrichtenproduktes M, worin

$$M = M1^{(e/e1 + e/e2 + \ldots + e/ek)};$$

Mittel zum Ausziehen einer Stapelwurzel R, die mit den genannten Exponentenmitteln und Nachrichtenmitteln gekoppelt sind, wobei

$$R = M^{1/e};$$

und

mit den genannten Ausziehmitteln gekoppelte Mittel zur Aufspaltung der Stapelwurzel R in Subprodukte und Ausziehen der Wurzeln der Nachrichten-Datensignale als die e1$^{te}$, e2$^{te}$, ...ek$^{te}$ Wurzel des Nachrichten-Datensignals M1 aus den genannten Subprodukten.

## Revendications

1. Procédé cryptographique, exécuté à l'aide d'un processeur, pour le calcul simultané d'un schéma de chiffrage du type RSA à clé publique sur un premier signal de données d'un message M1 et un second signal de données d'un message M2, dans lequel on produit une racine $M1^{1/e1}$ du premier signal de données de message qui est une e1ième racine de M1, et une racine $M2^{1/e2}$ du second signal de données de message qui est une e2$^{ième}$ racine de M2, et où e1 et e2 sont relativement premiers, comprenant les étapes suivantes:

calcul d'un produit d'exposants e en multipliant e1 par e2;
calcul d'un produit de messages M où:

$$M = M1^{(e/e1)}M2^{(e/e2)};$$

calcul d'une racine groupée R où

$$R = M1^{1/e};$$

calcul d'un inverse d'Euklide t de e2 modulo e1; et
calcul de $R^{e2*t}/(M1^{((e2*t-1)/e1)}M2^t)$,
produisant ainsi la racine du premier signal de données de message $M1^{(1/e1)}$.

2. Procédé selon la revendication 1, dans lequel l'étape de calcul du produit de messages M comprend l'étape de calcul de

$$M = M^{(e/e1 + e/e2)},$$

lorsque le premier signal de données de message est identique au second signal de données de message.

3. Procédé cryptographique exécuté à l'aide d'un processeur, pour le calcul simultané d'un schéma de chiffrage du type RSA à clé publique sur une pluralité de signaux de données de message M1, M2, ...Mk, où une pluralité de racines de signaux de données de message sont produites qui sont les e1$^{ième}$, e2$^{ième}$, ...ek$^{ième}$ racines de M1, M2, .. .Mk, respectivement, les ei et ej étant par paires relativement premiers quand i≠j, comprenant les étapes suivantes:

calcul d'un produit d'exposants e en multipliant e1∗e2∗...∗ek;
calcul d'un produit de messages M où

$$M = M1^{(e/e1)}M2^{(e/e2)} \ast \ldots \ast Mk^{(e/ek)};$$

calcul d'une racine groupée R où

$$R = M^{1/e};$$

scission de la racine groupée R en sous-produits; et
extraction des racines de signal de données de message qui sont les e1$^{ième}$, e2$^{ième}$, ...ek$^{ième}$ racines des signaux de données de message M1, M2, ...Mk des dits sous-produits.

4. Procédé cryptographique, exécuté à l'aide d'un processeur, pour la détermination simultanée d'une pluralité de racines e1, e2, ...en pour un seul signal de données de message M1 selon un schéma de chiffrage du type RSA à clé publique où les racines ei et ej sont par paires relativement premiers quand i≠j, comprenant les étapes suivantes:

calcul d'un produit d'exposants e en multipliant e1∗e2∗...∗ek;
calcul d'un produit de messages M où:

$$M = M1^{(e/e1 + e/e2 + \ldots + e/ek)};$$

calcul d'une racine groupée R dans laquelle $R = M^{1/e}$;
scission de la racine groupée R en sous-produits; et
extraction des racines du signal de données de message M1 des dits sous-produits.

5.   Appareil pour l'exécution simultanée d'un schéma de chiffrage du type RSA à clé publique sur une pluralité de racines de signaux de données de message qui sont des e1$^{ième}$, e2$^{ième}$, ...ek$^{ième}$ racines d'une pluralité de signaux de données de message M1, M2, ...Mk, respectivement, les ei et ej étant par paires relativement premiers quand i≠j, comportant:

un processeur pour effectuer des calculs,

des moyens d'exposant sensibles aux racines e1, e2, ...ek pour calculer un produit d'exposants e en multipliant e1∗e2∗...∗ek;

des moyens de message sensibles aux signaux de données de message M1, M2, ...Mk pour calculer un produit de messages M où

$$M \;=\; M1^{(e/e1)}M2^{(e/e2)} \ast ... \ast Mk^{(e/ek)};$$

des moyens couplés aux dits moyens d'exposant et aux dits moyens de message pour extraire une racine groupée R où

$$R \;=\; M^{1/e};$$

et

des moyens couplés aux dits moyens d'extraction pour scinder la racine groupée R en sous-produits et extraire les racines des signaux de données de message sous forme des e1$^{ième}$, e2$^{ième}$, ...ek$^{ième}$ racine des signaux de données de message M1, M2, ...Mk des dits sous-produits.

6.   Appareil pour l'exécution simultanée d'un schéma de chiffrage du type RSA à clé publique sur une pluralité de racines e1, e2, ...ek pour un seul signal de données de message M1, les ei et ej étant par paires relativement premiers quand i≠j, comportant:

un processeur pour effectuer des calculs,

des moyens d'exposant sensibles aux racines e1, e2, ...ek pour calculer un produit d'exposants e en multipliant e1∗e2∗...∗ek;

des moyens de message sensibles au signal de données de message M1 pour calculer un produit de messages M, où

$$M \;=\; M1^{(e/e1 \,+\, e/e2 \,+\, ... \,+\, e/ek)};$$

des moyens couplés aux dits moyens d'exposant et aux dits moyens de message pour extraire une racine groupée R, où

$$R \;=\; M^{1/e};$$

et

des moyens couplés aux dits moyens d'extraction pour scinder la racine groupée R en sous-produits et extraire les racines de signal de données de message sous forme de e1$^{ième}$, e2$^{ième}$, ...ek$^{ième}$ racines du signal de données de message M1 des dits sous-produits.